(19) **Europäisches Patentamt / European Patent Office / Office européen des brevets**

(11) **EP 3 022 271 B1**

(12) **FASCICULE DE BREVET EUROPEEN**

(45) Date de publication et mention de la délivrance du brevet:
**30.09.2020 Bulletin 2020/40**

(21) Numéro de dépôt: **14749928.9**

(22) Date de dépôt: **18.07.2014**

(51) Int Cl.:
*C09K 5/10* *(2006.01)*　　*H01B 3/22* *(2006.01)*

(86) Numéro de dépôt international:
**PCT/FR2014/051858**

(87) Numéro de publication internationale:
**WO 2015/008004 (22.01.2015 Gazette 2015/03)**

(54) **COMPOSITIONS DE FLUIDE DIELECTRIQUE OU CALOPORTEUR ET LEURS UTILISATIONS**

DIELEKTRISCHE ODER WÄRMEÜBERTRAGUNGSFLÜSSIGKEITSZUSAMMENSETZUNGEN UND VERWENDUNGEN DAVON

DIELECTRIC OR HEAT-TRANSFER FLUID COMPOSITIONS AND USES OF SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2013 FR 1357154**

(43) Date de publication de la demande:
**25.05.2016 Bulletin 2016/21**

(73) Titulaire: **Arkema France**
**92700 Colombes (FR)**

(72) Inventeur: **WALKER, Jeremie**
**F-01480 Ars sur Formans (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**US-A- 4 744 000**　　**US-A- 5 017 733**
**US-A1- 2002 179 890**　　**US-B2- 7 744 950**

Printed by Jouve, 75001 PARIS (FR)

**Description**

**DOMAINE TECHNIQUE**

La présente invention se rapporte à une composition comprenant : (a) de 30 à 70% en poids d'un mélange de benzyltoluène et de dibenzyltoluène, et (b) de 70 à 30% en poids d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, à l'exclusion du phénylxylyléthane.

La présente invention a également pour objet l'utilisation de cette composition comme fluide diélectrique et/ou fluide caloporteur, en particulier dans des conditions d'usage à très basses températures, telles que des températures inférieures à -40°C, ou bien encore inférieures à - 60°C. La présente invention porte également sur des mélanges de ces compositions avec des huiles minérales et/ou des esters naturels ou synthétiques.

Enfin, elle concerne des dispositifs, notamment électriques, intégrant cette composition.

**ARRIERE-PLAN DE L'INVENTION**

Les fluides diélectriques sont des matériaux isolants classiquement utilisés dans certains équipements électriques tels que les câbles haute tension et les transformateurs, dans lesquels ils sont imprégnés sur un matériau solide servant d'isolant, tel qu'un film de polypropylène, éventuellement associé à une couche de papier, appelé « mixte film-papier ». Dans les transformateurs, ces fluides servent également de fluides caloporteurs. Les fluides diélectriques sont également utilisés dans les condensateurs, où ils permettent de séparer les armatures conductrices et d'éviter ainsi qu'elles n'entrent en contact l'une avec l'autre et génèrent un court-circuit. Il est ainsi possible de fabriquer des condensateurs de grande capacité ayant un encombrement réduit.

Différents fluides diélectriques ont été mis sur le marché pour remplacer les pyralènes, qui sont des composés organiques chlorés considérés comme des polluants organiques persistants ayant des effets néfastes sur la santé humaine et sur l'environnement. Il s'agit essentiellement de mélanges complexes d'hydrocarbures obtenus par raffinage d'huiles minérales issues du pétrole.

Ainsi, le document US 4,523,044 divulgue un fluide diélectrique constitué d'un mélange comprenant majoritairement des oligomères du benzyltoluène, ainsi qu'une faible proportion d'oligomères du ditolyl phényl méthane. Un mélange de mono- et dibenzyl toluène est également disponible auprès de la société ARKEMA sous la dénomination commerciale Jarylec® C101.

Le document US 4 744 000 décrit l'utilisation dans des condensateurs de fluides diélectriques comprenant du phénylxylyléthane en association avec des phényltolylméthanes, en particulier avec un mélange de monobenzyltoluène et de dibenzyltoluène, et ceci notamment dans le but d'obtenir des performances améliorées au niveau de la tension d'apparition de décharges.

Enfin, le document US 5 017 733, décrit le pouvoir isolant électrique à basses températures de différents mélanges d'huiles contenant des composés bi-cycliques aromatiques. Toutefois, les huiles mises en œuvre dans ce document ne comprennent pas de dibenzyltoluène.

Bien que les fluides de l'art antérieur présentent une résistance aux tensions élevées, qui se caractérise par un seuil élevé d'apparition de décharges partielles et par une grande vitesse d'extinction de ces décharges, leur comportement à basse température n'est pas toujours satisfaisant. Ceci entrave leur utilisation dans les climats froids, notamment. Ainsi, ces fluides présentent habituellement une viscosité trop élevée à basse température, qui affecte négativement la vitesse de diffusion des gaz (notamment de l'hydrogène) produits par suite d'une concentration du champ électrique dans certaines zones du dispositif comprenant ces fluides. Il s'ensuit une augmentation du taux de saturation du gaz dans le fluide, qui génère des bulles entraînant une décharge partielle. Celle-ci peut aboutir à un claquage ou en tout cas réduire la durée de vie du dispositif électrique. En outre, ces fluides diélectriques ont tendance à cristalliser à basse température, ce qui est également préjudiciable au bon fonctionnement des dispositifs électriques les contenant.

Par conséquent, il serait souhaitable de pouvoir disposer d'une composition présentant une viscosité suffisamment faible à basse température, et un point d'écoulement suffisamment bas, pour pouvoir être utilisée comme fluide diélectrique à des températures inférieures à -40°C, en particulier inférieures à -60°C.

En outre, la faible viscosité de ces fluides permettrait également de les utiliser comme fluides caloporteurs, notamment dans des transformateurs.

La Demanderesse a découvert que ces besoins pouvaient être satisfaits par une composition renfermant, outre un mélange de benzyltoluène et de dibenzyltoluène, au moins un autre composé particulier.

## EXPOSE DE L'INVENTION

La présente invention a ainsi pour premier objet une composition comprenant : (a) de 30 à 70% en poids d'un mélange de benzyltoluène et de dibenzyltoluène, et (b) de 70 à 30% en poids d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, , ladite composition renfermant de 20 à 60% en poids de benzyltoluène et de 5 à 20% en poids, de préférence de 5 à 15% en poids, de dibenzyltoluène, par rapport au poids total de la composition, comme fluide diélectrique et/ou fluide caloporteur à des températures d'usage inférieures à -40°C, de préférence -60°C, et dans laquelle le composé b) ne comprend pas de phénylxylyléthane.

La présente invention a également pour objet l'utilisation de cette composition comme fluide diélectrique et/ou fluide caloporteur, en particulier pour des transformateurs, en particulier des transformateurs de puissance ou de mesure ou des transformateurs haute tension, des câbles haute tension, des condensateurs, en particulier des condensateurs à haute tension, de traversées ou de changeurs de prise en charge, des redresseurs de courant, des filtres harmoniques.

L'invention a aussi pour autre objet l'utilisation d'une composition comprenant : (a) de 30 à 70% en poids d'un mélange de benzyltoluène et de dibenzyltoluène, et (b) de 70 à 30% en poids d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, ladite composition renfermant de 20 à 60% en poids de benzyltoluène et de 5 à 20% en poids, de préférence de 5 à 15% en poids, de dibenzyltoluène, par rapport au poids total de la composition, comme fluide diélectrique et/ou fluide caloporteur à des températures d'usage inférieures à -40°C, de préférence -60°C, et dans laquelle le composé b) ne comprend pas de phénylxylyléthane, comme fluide diélectrique et/ou fluide caloporteur à des températures d'usage inférieures à -40°C, de préférence -60°C, en particulier pour des transformateurs, en particulier des transformateurs de puissance ou de mesure ou des transformateurs haute tension, des câbles haute tension, des condensateurs, en particulier des condensateurs à haute tension, de traversées ou de changeurs de prise en charge, des redresseurs de courant, des filtres harmoniques.

Elle a aussi pour objet des dispositifs, notamment électriques, du type susmentionné qui comprennent la composition selon l'invention.

## DESCRIPTION DETAILLÉE DE MODES DE RÉALISATION

La composition selon l'invention renferme, comme premier constituant, un mélange de benzyltoluène (BT) et de dibenzyltoluène (DBT). Ce mélange peut être fait à partir des composés commerciaux pris séparément ou encore obtenu suivant un procédé de condensation du chlorure de benzyle sur le toluène en présence d'un catalyseur de Friedel et Crafts, puis distillation. On préfère qu'il soit préparé suivant un procédé tel que celui décrit dans le document EP 0 435 737, qui utilise le chlorure ferrique comme catalyseur. La réaction peut être conduite à une température de 50 à 150°C. Le mélange réactionnel obtenu est généralement traité pour éliminer, d'une part, le toluène excédentaire par distillation, et, d'autre part, les produits chlorés organiques formés (par exemple par mise en contact, à chaud et sous agitation, avec un alcoolate).

Le benzyltoluène peut être sous forme de tout isomère, notamment choisi parmi l'ortho- (CAS 713-36-0), le para- (CAS 620-83-7), le métabenzyltoluène et leurs mélanges (notamment CAS 27776-01-8).

On peut utiliser tout isomère du dibenzyltoluène et leurs mélanges (CAS 26898-17-9).

On préfère que la composition selon l'invention (mélange BT/DBT + constituant (b)) renferme de 20 à 60% en poids de benzyltoluène et de 5 à 20% en poids, de préférence de 5 à 15% en poids, de dibenzyltoluène, ces pourcentages étant exprimés par rapport à l'ensemble de la composition. On préfère en outre utiliser comme constituant (a) un mélange de 15% en poids de dibenzyltoluène et de 85% en poids de benzyltoluène ou un mélange de 25% en poids de dibenzyltoluène et de 75% en poids de benzyltoluène. Un mélange de benzyltoluène et dibenzyltoluène est notamment disponible dans le commerce auprès de la société ARKEMA sous la dénomination commerciale Jarylec® C101.

Le second constituant de cette composition est constitué d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, étant entendu que ce composé ne peut être le phénylxylyléthane.

On peut mettre en œuvre tout isomère de tels composés aromatiques, bien que, selon certains modes de réalisation exposés ci-après, certains isomères soient préférés.

Par noyaux benzéniques « condensés » ou « fusionnés », on entend accolés via deux de leurs atomes de carbone (structure du type naphtalène). Selon une forme d'exécution préférée de l'invention, ces noyaux benzéniques ne sont pas condensés.

La composition selon l'invention peut comprendre un ou plusieurs de ces composés qui peuvent eux-mêmes être présents sous la forme d'un ou plusieurs de leurs isomères. Dans le cas où le constituant (b) comprend un mélange de monomère et d'oligomère(s), le monomère représente au moins 50% en poids, au moins 60% en poids, au moins 70% en poids, voire au moins 80% en poids, de ce mélange.

Les noyaux benzéniques peuvent être, indépendamment l'un de l'autre, non substitués ou substitués par un à trois, et de préférence un à deux, groupes alkyle en $C_1$-$C_3$, tels qu'un groupe méthyle ou isopropyle, de préférence un groupe méthyle.

Deux substituants d'un noyau benzénique portés par des atomes de carbone adjacents peuvent être reliés l'un à l'autre pour former un cycle, de préférence un cycle en $C_6$. En variante, un substituant d'un noyau benzénique et le groupe espaceur adjacent peuvent être reliés l'un à l'autre pour former un cycle.

Des exemples de groupes espaceurs peuvent être choisis parmi les groupes -CH(CH$_3$)-,

$$-CH_2-CH_2- \text{ et } -O-.$$

Des exemples de constituants (b) sont :

- le diphényléthane (DPE) ou ses isomères, en particulier le 1,1DPE (CAS 612-00-0), le 1,2DPE (CAS 103-29-7) et leurs mélanges (notamment CAS 38888-98-1). Le DPE peut être préparé par distillation des résidus de distillation obtenus lors de la production d'éthylbenzène (EP 0 098 677). Il est également disponible commercialement ;
- le ditolyléther (DT) ou ses isomères, en particulier ceux répondant aux numéros CAS 4731-34-4, CAS 28299-41-4 et leurs mélanges. Le DT est notamment disponible dans le commerce auprès de la société LANXESS sous la dénomination commerciale DiphylDT ;
- le 1,2,3,4 - tétrahydro (-1 phényl éthyl) naphtalène (CAS 63674-30-6), ce produit étant commercialement disponible notamment chez Dow sous la référence Dowtherm RP ;
- le di-isopropylnaphtalène (CAS 38640-62-9), notamment disponible auprès de la société INDUS CHEMIE LIMITED sous la dénomination commerciale KMC 113 ;
- et leurs mélanges.

Le diphényléthane, ainsi que ses isomères et oligomères, sont préférés comme second constituant de la composition selon l'invention. Il est avantageux que le 1,1diphényléthane (CAS 612-00-0) soit le composé majoritaire. Selon un mode de réalisation particulier, le constituant (b) est le 1,1diphényléthane (CAS 612-00-0).

Outre les constituants précités, cette composition peut renfermer au plus 10% en poids, par rapport au poids des constituants (a) précités, de composés aromatiques, sous forme de monomères, d'oligomères ou d'un mélange des deux, tels que le ditolylphénylméthane. Un tel composé est notamment présent en mélange avec le constituant (a) selon l'invention dans les produits Jarytherm BT06 et Jarytherm DBT commercialisés par la société ARKEMA. Ces produits peuvent être préparés comme décrit dans le document US 4,523,044.

La composition selon l'invention présente en outre avantageusement au moins une, au moins deux, voire l'ensemble des caractéristiques suivantes :

- une viscosité cinématique à 20°C inférieure à 6 cSt, avantageusement inférieure à 5 cSt, et généralement supérieure à 4 cSt,
- un point d'écoulement inférieur à -65°C, voire inférieur à -70°C,
- une absence de cristallisation après 3 mois de conservation à -34°C.

Selon un autre caractéristique avantageuse, cumulée partiellement ou totalement aux caractéristiques précédentes, la composition selon l'invention présente également une absence de cristallisation après 20 jours de conservation à -60°C.

En outre, cette composition a généralement un point éclair supérieur ou égal à 140°C.

Comme indiqué précédemment, cette composition peut être utilisée comme fluide diélectrique et/ou caloporteur. Cette composition peut également être utilisée en mélange avec au moins une huile minérale, de préférence hydrogénée, ou bien encore à un ester naturel ou synthétique, ou leurs mélanges. Dans ce cas, le mélange ainsi obtenu contient généralement au plus 20% en poids, de préférence au plus 15% en poids et encore plus préférentiellement entre 8 et 10% en poids de la composition. L'huile minérale peut être inhibée ou non, selon les recommandations de la norme CEI 60296-4Ed. L'huile minérale sélectionnée a en outre de préférence un « gassing » positif, selon les recommandations de la norme CEI 60628-A (tendance à produire du gaz). Plus précisément, le gassing est une caractéristique connue pour évaluer la tendance d'un isolant liquide_(huile) à absorber ou au contraire émettre du gaz (hydrogène notamment) lorsque cet isolant est soumis à de très fortes contraintes électriques. La valeur de gassing est positive si du gaz est libéré, et négative si du gaz est absorbé. On cherche généralement à mettre en œuvre des compositions présentant un gassing négatif, car cela a un effet favorable sur les propriétés d'usage des systèmes les contenant (limitation des problèmes liés à l'ionisation notamment). Or, il a été trouvé que l'ajout d'une composition selon l'invention à une huile présentant initialement un « gassing » positif (tel que mesuré selon la norme CEI 60628-A) permettait de conférer au mélange obtenu un caractère de gassing négatif. Ceci constitue un autre avantage particulièrement intéressant dans les utilisations possibles des compositions selon l'invention.

La composition selon l'invention peut être mise œuvre à titre de matière isolante dans des dispositifs tels que des transformateurs de puissance ou de mesure ou des transformateurs haute tension, des câbles haute tension, des condensateurs, en particulier des condensateurs à haute tension, de traversées ou de changeurs de prise en charge, des redresseurs de courant, des filtres harmoniques et analogues.

Selon l'invention, il est également possible d'utiliser une composition comprenant : (a) de 30 à 70% en poids d'un mélange de benzyltoluène et de dibenzyltoluène, et (b) de 70 à 30% en poids d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, comme fluide diélectrique et/ou fluide caloporteur à des températures d'usage inférieures à -40°C, de préférence -60°C.

Toujours selon l'invention, il est en outre possible d'utiliser une composition comprenant : (a) de 30 à 70% en poids d'un mélange de benzyltoluène et de dibenzyltoluène, et (b) de 70 à 30% en poids d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, comme fluide diélectrique et/ou fluide caloporteur à des températures d'usage inférieures à -40°C, de préférence inférieures à -60°C, pour des transformateurs, en particulier des transformateurs de puissance ou de mesure ou des transformateurs haute tension, des câbles haute tension, des condensateurs, en particulier des condensateurs à haute tension, de traversées ou de changeurs de prise en charge, des redresseurs de courant, des filtres harmoniques.

L'invention sera mieux comprise à la lumière des exemples suivants, qui sont donnés à titre purement illustratif et n'ont pas pour but de limiter la portée de l'invention, définie par les revendications.

**EXEMPLES**

Dans les exemples suivants, les viscosités, point d'écoulement et tests de cristallisation ont été réalisés de la manière suivante :

A. Détermination des viscosités

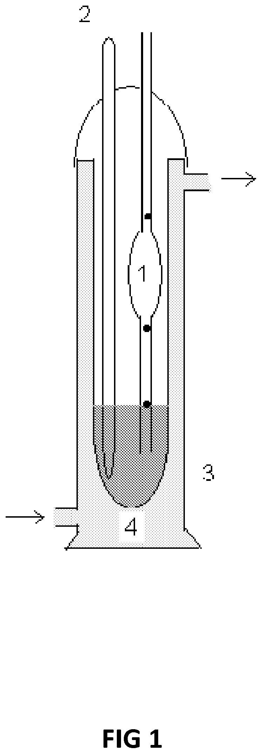

On détermine la viscosité à l'aide de tubes viscosimétriques d'une composition à 20°C. Le principe réside dans la mesure de la vitesse d'écoulement du fluide dans un tube calibre dans une fenêtre de temps donnée.
On utilise un bain thermostaté, un chronomètre et un ensemble verrerie à double enveloppe pour la régulation associé à un tube viscosimétrique et un ballon pour placer l'échantillon. Cet ensemble est représenté à la **Figure 1,** dans laquelle (1) est le tube viscosimétrique, (2) est le thermomètre, (3) est l'ensemble verrerie de forme cylindrique pour stabiliser la température de mesure et (4) est une huile silicone (T° > 100°C) ou de l'eau qui sont fluides à la température de mesure.

On met la consigne du bain thermostaté à 20°C. On prélève environ 50 ml d'échantillon dans le ballon prévu à cet effet. On introduit ce ballon dans l'ensemble verrerie. Le tube viscosimétrique est choisi de façon adaptée à la viscosité à mesurer. Un tube viscosimétrique de diamètre 0.77 a été utilisé. Ce tube est mis dans l'enceinte et est placé de sorte que le niveau du produit à mesurer soit à la hauteur du point intermédiaire (repère), en bas du tube. On introduit le thermomètre. Lorsque l'échantillon est à 20°C, on l'aspire dans le tube viscosimétrique à l'aide d'une propipette jusqu'au-dessus du point supérieur. On laisse ensuite couler le produit en enlevant la propipette. Lorsque le produit arrive au point supérieur, on démarre le chronomètre jusqu'à ce que le produit arrive au deuxième point.
On note le temps que le produit a mis pour s'écouler du point supérieur au deuxième point. Pour chaque échantillon, 3 mesures sont prises et on calcul la moyenne des 3 mesures.

La formule pour calculer la viscosité d'un fluide est la suivante :

$$\eta = K \times t$$

dans laquelle :

η : viscosité en centistokes cSt.
K : constante d'étalonnage par gravité.
t: durée d'écoulement de l'échantillon, en secondes, entre les deux repères sous l'effet de la pesanteur.

Dans le cas d'espèce, la constante du tube 0.77 est de 0.02388.

B. Détermination du point d'écoulement

On détermine la température correspondant à une viscosité donnée des mélanges, pour laquelle les mélanges ne sont plus du tout fluides.

On utilise un Rhéomètre Physica MCR 301 d'Anton Paar, équipé de l'enceinte de refroidissement par azote liquide, référence CTD 450L, selon une géométrie de mesure de type: plan/plan 25.

Paramètres de la mesure :

Vitesse de rotation du mobile : 1 tour/min

Nombre de points/ essai : 180

Programme de température : refroidissement de -30°C à -80°C avec une rampe de 2°C/min

La température d'écoulement a été fixée de la façon suivante : c'est la température correspondant à une viscosité de 50 000 Pa.s.

C. Essais de cristallisation en tubes

On soumet les échantillons à des cycles thermiques avec ou sans agitation et/ou ensemencement avec des cristaux, pour provoquer une cristallisation.

Les essais sont réalisés au moyen de :

Congélateur Zanussi : jusqu'à -34,0 °C

Enceinte climatique CLIMATS : jusqu'à -60°C

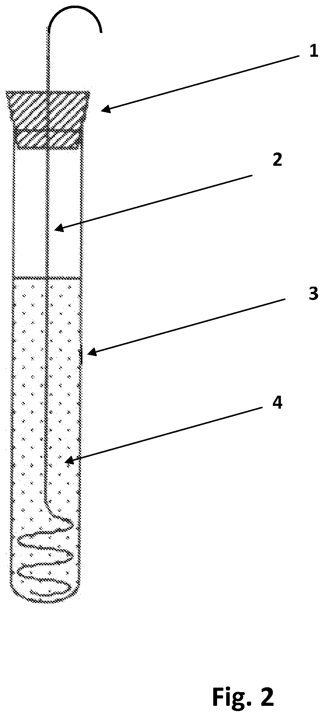

Tubes à essais bouchés de bouchons non percés (identiques au schéma donné à la **Figure 2**) Tubes à essais munis de bouchons et d'agitateurs (selon le schéma donné à la **Figure 2**)

Dans cette Figure 2 :(1) représente un bouchon silicone d'un diamètre inférieur de 14,5 mm et d'un diamètre supérieur de 17 mm ; (2) représente une tige d'agitation d'un diamètre de 1,5 mm ; (3) représente un tube à essai d'un diamètre intérieur de 15 mm et d'un diamètre extérieur de 17 mm avec une hauteur de 180 mm ; (4) représente le liquide en essai

Les bouchons silicone ont été percés à l'aide d'un perce-bouchon de diamètre 5 mm.

La tige d'agitation se termine par deux spires de diamètre 11 à 13 mm, selon les tiges, et distantes d'environ 5 mm.

Les tubes à essais contenant les échantillons sont placés, soit dans un congélateur, soit dans l'enceinte climatique.

L'agitation se fait en actionnant la tige verticalement, trois à quatre fois, et en frottant les parois du tube.

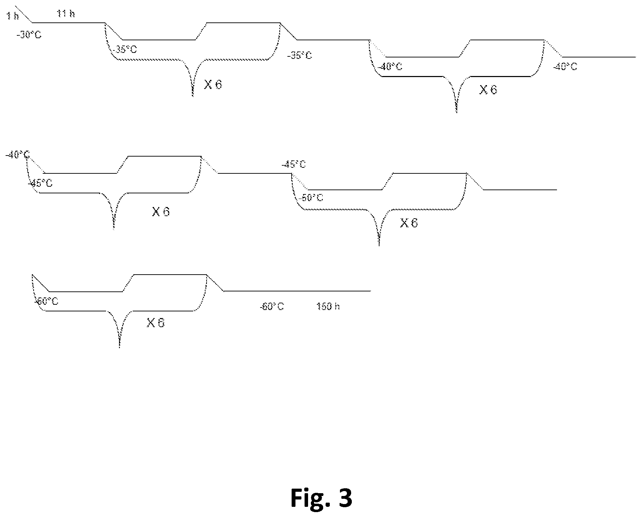

Les échantillons peuvent être soumis à des cycles de température. Les cycles exacts de température allant de -25°C à -60°C sont donnés en **figure 3**, et sont les suivants :

Les échantillons à -25°C sont refroidis en une heure pour atteindre -30°C. Après 11h à -30°C, les échantillons sont refroidis en une heure pour atteindre -35°C. Après 11h à -35°C, les échantillons sont réchauffés en une heure jusqu'à -30°C, et resterons pendant 11h à -30°C, avant d'être à nouveau refroidis en une heure jusqu'à -35°C. Les échantillons seront au total refroidis à -35°C puis réchauffés de la sorte jusqu'à -30°C, à six reprises.

Après le sixième cycle, les échantillons sont refroidis en une heure à -35°C, et restent 11h à - 35°C, avant d'être à nouveau refroidis en une heure à -40°C. Après 11h à -40°C, les échantillons sont réchauffés en une heure jusqu'à -35°C, et resterons pendant 11h à -35°C, avant d'être à nouveau refroidis en une heure jusqu'à -40°C. Les échantillons seront au total refroidis à -40°C puis réchauffés de la sorte jusqu'à -35°C, à six reprises.

On opère de la sorte à nouveau pour refroidir les échantillons de -40°C à -45°C, puis de -45°C à -50°C, et enfin de -50°C à -60°C, pour finir par maintenir les échantillons pendant 150h à -60°C.

Ces échantillons peuvent aussi, selon les cas, être ensemencés avec des cristaux de monobenzyltoluène. Pour cela, on introduit dans les échantillons des cristaux de monobenzyltoluène à l'aide d'une spatule plate de 5 mm de largeur.

Les tubes sont ensuite observés régulièrement et toute évolution visuelle est notée.

**Exemple 1**

On a préparé différents fluides diélectriques selon l'invention, désignés ci-après par Mél 113 à Mél 117, ainsi que des fluides diélectriques comparatifs, comprenant uniquement le constituant (a) selon l'invention (Jarylec® C101) ou celui-ci en mélange avec moins de 30% en poids de constituant (b) (Mél 111 et Mél 112).

Pour ce faire, on a distillé le produit Jarytherm BT06 d'ARKEMA de façon à obtenir du benzyltoluène quasiment pur, qui a ensuite été mélangé à du dibenzyltoluène fourni par la société ARKEMA, dans un rapport en poids du benzyltoluène au dibenzyltoluène de 85:15. On a ainsi obtenu le constituant (a) selon l'invention. Celui-ci a été mélangé à au moins un constituant (b) selon l'invention. Dans la première série, il s'agit du 1,1DPE, fourni par la société JX NIPPON TEXAS CHEMICAL.

On a ensuite évalué, pour chacun de ces fluides :

- le point d'écoulement ; on a effectué pour cela une mesure de viscosité d'un échantillon de fluide à l'aide d'un rhéomètre à géométrie plan-plan à cisaillement dynamique de modèle Anton Paar MCR301, équipé d'un système de refroidissement à l'azote. L'échantillon a été placé entre les deux plateaux parallèles du rhéomètre à température ambiante et a été refroidi progressivement jusqu'à -80°C à un taux de 2°C/min. Un taux de cisaillement de $1,3s^{-1}$ a été appliqué à l'échantillon. Son point d'écoulement a été noté à l'apparition de la première discontinuité dans les valeurs de viscosité pendant le refroidissement (autrement dit avant que l'échantillon ne soit devenu trop visqueux pour pouvoir en mesurer la viscosité) ;
- la viscosité cinématique à 20°C ; on a pour cela mesuré la vitesse d'écoulement du fluide à l'aide d'un tube viscosimétrique calibré ;
- l'absence de cristallisation ; on a pour cela placé le fluide dans une enceinte réfrigérée à une température de -34°C pendant 90 jours, en ensemençant le fluide avec des cristaux de BT le 4ème, 11ème, 19ème, 54ème, et 89ème jour.

La composition des fluides testés, ainsi que les résultats des tests précités, sont rassemblés dans les tableaux ci-dessous :

Tableau I

| | Formulation (proportion) | Point d'écoulement (°C) | Viscosité (°C/cSt) | Cristallisation à -34°C |
|---|---|---|---|---|
| Jarylec® C101 (comparatif) | BT/DBT (75/25) | -72.4 | 20.0/6.50 | présence de cristaux après 18 jours |
| Mél 111 (comparatif) | BT/DBT/1,1DPE (76.5/13.5/10) | -76 | 20.2/4.99 | présence de cristaux après 22 jours |
| Mél 112 (comparatif) | BT/DBT/1,1DPE (68/12/20) | -75.7 | 20.5/4.94 | présence de cristaux après 22 jours |
| Mél 113 | BT/DBT/1,1DPE (59.5/10.5/30) | -75.7 | 20.4/4.94 | absence de cristaux après 90 jours |
| Mél 114 | BT/DBT/1,1DPE (51/9/40) | -76 | 20.4/4.97 | absence de cristaux après 90 jours |
| Mél 115 | BT/DBT/1,1DPE (42.5/7.5/50) | -76 | 20.2/4.94 | absence de cristaux après 90 jours |

Tableau II

| | Formulation (proportion) | Point d'écoulement (°C) | Viscosité (°C/cSt) | Cristallisation à -34°C |
|---|---|---|---|---|
| Jarylec® C101 (comparatif) | BT/DBT (75/25) | -65.5 | 20.0/ 6.50 | présence de cristaux après 11jours |
| Mél 116 | BT/DBT/1,1DPE (30/10/60) | -67.9 | 19.9/5.30 | absence de cristaux après 90jours |
| Mél 117 | BT/DBT/1,1DPE (22.5/7.5/70) | -68.7 | 19.8/5.20 | absence de cristaux après 90jours |

On observe ainsi que seules les compositions selon l'invention permettent d'atteindre à la fois une viscosité cinématique inférieure à 6 cSt à 20°C, un point d'écoulement inférieur à -65°C et une absence de cristallisation à -34°C.

**Exemple 2**

On a procédé comme dans l'exemple 1, en préparant et en évaluant diverses compositions de fluides diélectriques qui diffèrent les unes des autres par la nature de leurs ingrédients et/ou les proportions relatives en poids de ces derniers. Dans les tableaux qui suivent, les abréviations qui apparaissent ont les significations suivantes :

    BT : benzyltoluène
    DBT : dibenzyltoluène
    1.1DPE : 1,1 diphényléthane
    KMC113 : di-isopropylnaphtalène
    DiphylDT : Ditolylether

Les caractéristiques recherchées pour les compositions étaient les suivantes :

    Viscosité cinématique < 6cST à 20°C
    Point écoulement <-65°C, voire <-70°C
    Non cristallisation à -34°C pendant 3 mois
    Non cristallisation à -60 °C pendant 20 jours

Les résultats des essais sont consignés dans le Tableau III (température isotherme à -34°C et - 60°C) et dans le Tableau IV (cycle température de -25°C à -60°C) donnés ci-après. Dans les deux tableaux, les isothermes à -60°C (avec ou sans cycle préalable) ont été maintenus pendant 20 jours.

**Tableau III** : Essais de Cristallisation en isotherme à -34°C et à - 60°C sans et avec agitation

| Nom | Formulation | Proportion | Viscosité (cSt) à 20°C | Pour Point (°C) | Cristallisation | | | |
|---|---|---|---|---|---|---|---|---|
| | | | | | Isotherme -34°C | Isotherme -34°C avec agitation et ensemencement (1) | Isotherme -60°C | Isotherme -60°C après agitation (2) |
| TM5 | 1.1DPE/BT/DBT | 10/76.5/13.5 | 4.99 | -77.6 | non | 100% | non | 50% |
| TM6 | 1.1DPE/BT/DBT | 20/68/12 | 4.94 | -77.4 | non | 75% | non | non |
| TM7 | 1.1DPE/BT/DBT | 30/59.5/10.5 | 4.94 | -77.4 | non | 15% | non | non |
| TM8 | 1.1DPE/BT/DBT | 40/51/9 | 4.97 | -77.7 | non | non | non | non |
| TM9 | 1.1DPE/BT/DBT | 50/42.5/7.5 | 4.94 | -77.6 | non | non | non | non |
| TM12 | 1.1DPE/BT/DBT | 30/52.5/17.5 | 5.74 | -75.2 | non | - | non | non |
| TM13 | 1.1DPE/BT/DBT | 40/45/15 | 5.60 | -75.7 | non | - | non | non |
| TM14 | 1.1DPE/BT/DBT | 50/37.5/12.5 | 5.47 | -76.2 | non | - | non | non |
| TM41 | 1.1DPE/BT/DBT | 60/30/10 | 5.28 | -76.0 | non | - | - | - |
| TM25 | KMC113/BT/DBT | 30/59.5/10.5 | 5.79 | -74.9 | non | - | non | non |
| TM27 | DiphylDT/BT/DBT | 40/45/15 | 5.83 | -71.3 | non | - | non | non |
| TM28 | DiphylDT/BT/DBT | 30/52.5/17.5 | 5.83 | -72.0 | non | - | non | non |
| TM30 | DiphylDT/BT/DBT | 40/51/9 | 5.31 | -72.9 | non | - | non | non |
| TM31 | DiphylDT/BT/DBT | 30/59.5/10.5 | 5.24 | -74.3 | non | - | non | non |

(1) série d'essais à -34°C avec agitation et ensemencement.
(2) pour les essais à -60°C, les ensemencements ne sont pas effectués pour éviter l'entrée de l'eau dans les tubes qui fausserait les essais en formant des cristaux.

**Tableau IV** : Essais cristallisation avec des cycles de température de -25°C à -60°C

| Nom | Formulation | Proportion | Viscosité (cSt) à 20°C | Pour Point (°C) | Cristallisation | | |
|---|---|---|---|---|---|---|---|
| | | | | | Cycles températures | Cycles températures + isotherme -60°C (3) | Cycles températures + isotherme -60°C après agitation (4) |
| TM5 | 1.1DPE/BT/DBT | 10/76.5/13.5 | 4.99 | -77.6 | cristaux sur tige | cristaux sur tige | 75% |
| TM7 | 1.1DPE/BT/DBT | 30/59.5/10.5 | 4.94 | -77.4 | non | non | non |
| TM8 | 1.1DPE/BT/DBT | 40/51/9 | 4.97 | -77.7 | non | non | non |
| TM9 | 1.1DPE/BT/DBT | 50/42.5/7.5 | 4.94 | -77.6 | non | non | non |
| TM39 | 1.1DPE/BT/DBT | 60/34/6 | 4.93 | -77.1 | non | non | non |
| TM40 | 1.1DPE/BT/DBT | 70/25.5/4.5 | 4.97 | -77.3 | non | non | non |
| TM12 | 1.1DPE/BT/DBT | 30/52.5/17.5 | 5.74 | -75.2 | non | non | non |
| TM13 | 1.1DPE/BT/DBT | 40/45/15 | 5.60 | -75.7 | non | non | non |
| TM14 | 1.1DPE/BT/DBT | 50/37.5/12.5 | 5.47 | -76.2 | non | non | non |
| TM41 | 1.1DPE/BT/DBT | 60/30/10 | 5.28 | -76.0 | non | non | non |
| TM25 | KMC113/BT/DBT | 30/59.5/10.5 | 5.79 | -74.9 | non | non | non |
| TM27 | DiphylDT/BT/DBT | 40/45/15 | 5.83 | -71.3 | non | non | non |
| TM28 | DiphylDT/BT/DBT | 30/52.5/17.5 | 5.83 | -72.0 | non | non | non |
| TM30 | DiphylDT/BT/DBT | 40/51/9 | 5.31 | -72.9 | non | non | non |
| TM31 | DiphylDT/BT/DBT | 30/59.5/10.5 | 5.24 | -74.3 | non | non | non |
| (3) à la fin du 2ème essai, l'isotherme à -60°C est maintenu pendant 20 jours sans agitation | | | | | | | |
| (4) à la fin de l'isotherme à -60°C, les tubes équipés d'agitateur sont agités manuellement puis maintenus à -60°C pendant 9 jours | | | | | | | |

**Exemple 3**

Cet exemple a pour but d'illustrer l'influence d'une composition selon l'invention sur les propriétés de gassing d'une huile minérale isolante connue. Les mesures de gassing ont été réalisées selon la norme CEI 60628-A.

L'huile minérale utilisée est vendue sous la référence commerciale de « Nytro Gemini X » par la Société NYNAS, et se présente sous la forme d'un mélange de composition suivante (les pourcentages sont en poids) :

Distillates (petroleum), hydrotreated light naphthenic : 50-100 % (CAS 64742-53-6)
Distillates (petroleum), hydrotreated light paraffinic : 0-50% (CAS 64742-55-8)
Lubricating oils (petroleum), C20-50, hydrotreated neutral oil-based : 0-50% (CAS 72623-87-1)
Distillates (petroleum), hydrotreated heavy paraffinic : 0-50% (CAS 64742-54-7)
2,6-di-tert-butyl-p-cresol : <0,4% (CAS 128-37-0)

Cette huile minérale seule affiche un gassing positif de + 10 $\mu$L/mn, ce qui signifie qu'elle n'est pas capable d'absorber de l'hydrogène issu des défauts électriques tels que des décharges partielles à l'intérieur de l'équipement.

On a ajouté à cette huile de référence 8% en poids de la composition TM9 de l'exemple 2, à savoir une composition conforme à l'invention de composition suivante : 1.1DPE/BT/DBT dans un rapport en poids de 50/42.5/7.5

Le mélange obtenu affiche un gassing négatif de - 17 $\mu$L/mn, c'est-à-dire que l'ajout d'une quantité faible (8%) d'une composition selon l'invention inverse la tendance au gassing de l'huile de référence.

**Revendications**

1. Composition comprenant : (a) de 30 à 70% en poids d'un mélange de benzyltoluène et de dibenzyltoluène, et (b) de 70 à 30% en poids d'au moins un composé choisi parmi les composés aromatiques en $C_{14}$-$C_{18}$ renfermant deux noyaux benzéniques condensés ou reliés l'un à l'autre par une liaison ou par un groupe espaceur autre que -$CH_2$-, leurs oligomères et leurs mélanges, ladite composition renfermant de 20 à 60% en poids de benzyltoluène et de 5 à 20% en poids, de préférence de 5 à 15% en poids, de dibenzyltoluène, par rapport au poids total de la composition, comme fluide diélectrique et/ou fluide caloporteur à des températures d'usage inférieures à -40°C, de préférence -60°C, et dans laquelle le composé b) ne comprend pas de phénylxylyléthane.

2. Composition selon la revendication 1, **caractérisée en ce que** le constituant (b) comprend un mélange de monomère et d'oligomère(s), et **en ce que** le monomère représente au moins 50% en poids, voire au moins 60% en poids, de ce mélange.

3. Composition selon l'une quelconque des revendications 1 ou 2, **caractérisée en ce que** les noyaux benzéniques sont substitués par un à trois, et de préférence un à deux, groupes alkyle en C1-C3, tels qu'un groupe méthyle ou isopropyle, de préférence un groupe méthyle.

4. Composition selon l'une quelconque des revendications 1 à 3, **caractérisée en ce que** les noyaux benzéniques sont substitués par au moins deux substituants portés par des atomes de carbone adjacents, reliés l'un à l'autre pour former un cycle, de préférence un cycle en $C_6$.

5. Composition selon l'une quelconque des revendications 1 à 4, **caractérisée en ce qu'**un substituant d'un noyau benzénique et le groupe espaceur adjacent sont reliés l'un à l'autre pour former un cycle.

6. Composition selon l'une quelconque des revendications 1 à 5, **caractérisée en ce que** le groupe espaceur est choisi parmi les groupes -$CH(CH_3)$-, -$CH_2$-$CH_2$- et -O-.

7. Composition selon l'une quelconque des revendications 1 à 6, **caractérisée en ce que** le constituant (b) est choisi parmi : le diphényléthane, le ditolyléther, le di-isopropylnaphtalène, le 1,2,3,4-tétrahydro-(1-phényléthyl)naphtalène, et leurs mélanges, et étant de préférence le diphényléthane, tout isomère ou oligomère de celui-ci ou leurs mélanges, et de façon tout à fait préférée le 1,1diphényléthane.

8. Composition selon l'une quelconque des revendications 1 à 7, **caractérisée en ce qu'**elle présente au moins une, au moins deux, voire l'ensemble des caractéristiques suivantes :

- une viscosité cinématique à 20°C inférieure à 6 cSt, avantageusement inférieure à 5 cSt, et généralement supérieure à 4 cSt,
- un point d'écoulement inférieur à -65°C, voire inférieur à -70°C,
- une absence de cristallisation après 3 mois de conservation à -34° C.

9. Composition selon la revendication 8, **caractérisée en ce qu'**elle présente en outre une absence de cristallisation après 20 jours de conservation à -60°C.

10. Utilisation d'une composition telle que définie à l'une quelconque des revendications 1 à 9 comme fluide diélectrique et/ou fluide caloporteur, en particulier pour des transformateurs, en particulier des transformateurs de puissance ou de mesure ou des transformateurs haute tension, des câbles haute tension, des condensateurs, en particulier des condensateurs à haute tension, de traversées ou de changeurs de prise en charge, des redresseurs de courant, des filtres harmoniques.

11. Dispositifs tels que des transformateurs de puissance ou de mesure ou des transformateurs haute tension, des câbles haute tension, des condensateurs, en particulier des condensateurs à haute tension, de traversées ou de changeurs de prise en charge, des redresseurs de courant, des filtres harmoniques, **caractérisés par le fait qu'**ils comprennent une composition selon l'une quelconque des revendications 1 à 9.

**Patentansprüche**

1. Zusammensetzung, umfassend: (a) 30 bis 70 Gew.-% einer Mischung von Benzyltoluol und Dibenzyltoluol und (b) 70 bis 30 Gew.-% mindestens einer Verbindung, die aus aromatischen $C_{14}$-$C_{18}$-Verbindungen mit zwei kondensierten oder über eine Bindung oder über eine von -$CH_2$- verschiedene Spacergruppe miteinander verknüpften Benzolkernen, Oligomeren davon und Mischungen davon ausgewählt ist, wobei die Zusammensetzung 20 bis 60 Gew.-% Benzyltoluol und 5 bis 20 Gew.-%, vorzugsweise 5 bis 15 Gew.-%, Dibenzyltoluol, bezogen auf das Gesamtgewicht der Zusammensetzung, enthält, als dielektrisches Fluid und/oder Wärmeträgerfluid bei Verwendungstemperaturen von weniger als -40 °C, vorzugsweise -60 °C, wobei die Verbindung b) kein Phenylxylylethan umfasst.

2. Zusammensetzung nach Anspruch 1, **dadurch gekennzeichnet, dass** der Bestandteil (b) eine Mischung von Monomer und Oligomer(en) umfasst und dass das Monomer mindestens 50 Gew.-% oder sogar mindestens 60 Gew.-% dieser Mischung ausmacht.

3. Zusammensetzung nach Anspruch 1 oder 2, **dadurch gekennzeichnet, dass** die Benzolkerne durch eine bis drei und vorzugsweise eine bis zwei $C_1$-$C_3$-Alkylgruppen, wie eine Methyl- oder Isopropylgruppe, vorzugsweise eine Methylgruppe, substituiert sind.

4. Zusammensetzung nach einem der Ansprüche 1 bis 3, **dadurch gekennzeichnet, dass** die Benzolkerne durch mindestens zwei Substituenten an benachbarten Kohlenstoffatomen substituiert sind, die miteinander zu einem Ring, vorzugsweise einem $C_6$-Ring, verknüpft sind.

5. Zusammensetzung nach einem der Ansprüche 1 bis 4, **dadurch gekennzeichnet, dass** ein Substituent eines Benzolkerns und die benachbarte Spacergruppe miteinander zu einem Ring verknüpft sind.

6. Zusammensetzung nach einem der Ansprüche 1 bis 5, **dadurch gekennzeichnet, dass** die Spacergruppe aus -$CH(CH_3)$-, -$CH_2$-$CH_2$- und -O-Gruppen ausgewählt ist.

7. Zusammensetzung nach einem der Ansprüche 1 bis 6, **dadurch gekennzeichnet, dass** der Bestandteil (b) aus Diphenylethan, Ditolylether, Diisopropylnaphthalin, 1,2,3,4-Tetrahydro(1-phenylethyl)naphthalin und Mischungen davon ausgewählt ist und vorzugsweise Diphenylethan, ein Isomer oder Oligomer davon oder Mischungen davon und ganz besonders bevorzugt 1,1-Diphenylethan ist.

8. Zusammensetzung nach einem der Ansprüche 1 bis 7, **dadurch gekennzeichnet, dass** sie mindestens eine, mindestens zwei oder sogar alle der folgenden Merkmale aufweist:

   - eine kinematische Viskosität bei 20 °C von weniger als 6 cSt, vorteilhafterweise weniger als 5 cSt, und im Allgemeinen mehr als 4 cSt,
   - einen Fließpunkt von weniger als -65 °C oder sogar weniger als -70 °C,

- keine Kristallisation nach 3 Monaten Aufbewahrung bei -34 °C.

9. Zusammensetzung nach Anspruch 8, **dadurch gekennzeichnet, dass** sie außerdem keine Kristallisation nach 20 Tagen Aufbewahrung bei -60 °C aufweist.

10. Verwendung einer Zusammensetzung gemäß einem der Ansprüche 1 bis 9 als dielektrisches Fluid und/oder Wärmeträgerfluid, insbesondere für Transformatoren, insbesondere Leistungs- oder Messtransformatoren oder Hochspannungstransformatoren, Hochspannungskabel, Kondensatoren, insbesondere Hochspannungskondensatoren, Durchführungskondensatoren, Laststufenschalter, Gleichrichter und Oberschwingungsfilter.

11. Vorrichtungen wie Leistungs- oder Messtransformatoren oder Hochspannungstransformatoren, Hochspannungskabel, Kondensatoren, insbesondere Hochspannungskondensatoren, Durchführungskondensatoren oder Laststufenschalter, Gleichrichter und Oberschwingungsfilter, **dadurch gekennzeichnet, dass** sie eine Zusammensetzung nach einem der Ansprüche 1 bis 9 umfassen.

## Claims

1. Composition comprising: (a) from 30 to 70% by weight of a mixture of benzyltoluene and dibenzyltoluene, and (b) from 70 to 30% by weight of at least one compound selected from $C_{14}$-$C_{18}$ aromatic compounds containing two benzene rings that are fused or connected to one another by a bond or by a spacer group other than -$CH_2$-, oligomers thereof and mixtures thereof, said composition containing from 20 to 60% by weight of benzyltoluene and from 5 to 20% by weight, preferably from 5 to 15% by weight, of dibenzyltoluene, relative to the total weight of the composition, as dielectric fluid and/or heat-transfer fluid at usage temperatures below -40°C, preferably - 60°C, and in which compound b) does not comprise any phenylxylylethane.

2. Composition according to Claim 1, **characterized in that** constituent (b) comprises a mixture of monomer and oligomer(s), and **in that** the monomer represents at least 50% by weight, or even at least 60% by weight, of this mixture.

3. Composition according to either of Claims 1 and 2, **characterized in that** the benzene rings are substituted with one to three, and preferably one to two, $C_1$-$C_3$ alkyl groups, such as a methyl or isopropyl group, preferably a methyl group.

4. Composition according to any one of Claims 1 to 3, **characterized in that** the benzene rings are substituted with at least two substituents borne by adjacent carbon atoms, connected to one another in order to form a ring, preferably a $C_6$ ring.

5. Composition according to any one of Claims 1 to 4, **characterized in that** one substituent of a benzene ring and the adjacent spacer group are connected to one another in order to form a ring.

6. Composition according to any one of Claims 1 to 5, **characterized in that** the spacer group is selected from -CH(CH$_3$)-, -CH$_2$-CH$_2$- and -O- groups.

7. Composition according to any one of Claims 1 to 6, **characterized in that** constituent (b) is selected from: diphenylethane, ditolyl ether, diisopropylnaphthalene, 1,2,3,4-tetrahydro(1-phenylethyl)naphthalene, and mixtures thereof, preferably being diphenylethane, any isomer or oligomer of this or mixtures thereof, and quite preferably 1,1-diphenylethane.

8. Composition according to any one of Claims 1 to 7, **characterized in that** it has at least one, at least two, or even all of the following features:

   - a kinematic viscosity at 20°C of less than 6 cSt, advantageously less than 5 cSt, and generally greater than 4 cSt,
   - a pour point of less than -65°C, or even less than - 70°C,
   - an absence of crystallization after storage for 3 months at -34°C.

9. Composition according to Claim 8, **characterized in that** it additionally has an absence of crystallization after storage for 20 days at -60°C.

**10.** Use of a composition as defined in any one of Claims 1 to 9, as dielectric fluid and/or heat-transfer fluid, in particular for transformers, in particular power or instrument transformers or high-voltage transformers, high-voltage cables, capacitors, in particular high-voltage capacitors, bushings or on-load tap changers, rectifiers and harmonic filters.

**11.** Devices such as power or instrument transformers or high-voltage transformers, high-voltage cables, capacitors, in particular high-voltage capacitors, bushings or on-load tap changers, rectifiers and harmonic filters, **characterized in that** they comprise a composition according to any one of Claims 1 to 9.

**FIG 1**

**Fig. 2**

**Fig. 3**

**RÉFÉRENCES CITÉES DANS LA DESCRIPTION**

**Documents brevets cités dans la description**

- US 4523044 A
- US 4744000 A
- US 5017733 A
- EP 0435737 A
- EP 0098677 A

**Littérature non-brevet citée dans la description**

- *CHEMICAL ABSTRACTS,* 713-36-0
- *CHEMICAL ABSTRACTS,* 620-83-7
- *CHEMICAL ABSTRACTS,* 27776-01-8
- *CHEMICAL ABSTRACTS,* 26898-17-9
- *CHEMICAL ABSTRACTS,* 612-00-0
- *CHEMICAL ABSTRACTS,* 103-29-7
- *CHEMICAL ABSTRACTS,* 38888-98-1
- *CHEMICAL ABSTRACTS,* 4731-34-4
- *CHEMICAL ABSTRACTS,* 28299-41-4
- *CHEMICAL ABSTRACTS,* 63674-30-6
- *CHEMICAL ABSTRACTS,* 38640-62-9
- *CHEMICAL ABSTRACTS,* 64742-53-6
- *CHEMICAL ABSTRACTS,* 64742-55-8
- *CHEMICAL ABSTRACTS,* 72623-87-1
- *CHEMICAL ABSTRACTS,* 64742-54-7
- *CHEMICAL ABSTRACTS,* 128-37-0